# EUROPEAN PATENT APPLICATION

(11) **EP 4 804 015 A1**
(43) Date of publication of application: **09.09.2026**
(21) Application number: 26163073.5
(22) Date of filing: 06.03.2026
(51) Int. Cl.: G06F 8/38, G06F 8/71, G06F 9/451

(54) **SNAPSHOTTING CODE-DEFINED VISUAL CONTENT IN COMPUTING SYSTEMS**

(30) Priority: 07.03.2025 US 202519073967
(71) Applicant: Figma, Inc., San Francisco, CA 94102 (US)
(72) Inventor: KERN, Alexander Simon, San Francisco, 94102 (US); KUFLUK, Kenneth P., San Francisco, 94102 (US)
(74) Representative: Morrall, Jonathan Ian McLachlan

(57) **Abstract**

Embodiments of the present disclosure provide techniques for rendering visual content in a design environment. An example method includes detecting that a change has been made to a code-defined visual asset loaded on a canvas in a design environment. The code-defined visual asset is copied to a hidden rendering environment in the design environment. The code-defined visual asset is rendered in the hidden rendering environment based on executing code associated with the code-defined visual asset in the hidden rendering environment. An image of the rendered code-defined visual asset is captured, and the captured image of the code-defined visual asset is displayed in the design environment.

## Description

### BACKGROUND

### Field of the Various Embodiments

Embodiments of the present disclosure relate generally to graphic design tools and, more specifically, to techniques for efficient rendering of visual content in a graphic design tool.

### Description of the Related Art

Graphic design tools generally allow for the creation of visual assets in a design environment. These visual assets may be defined, for example, as vector assets defined in terms of mathematical relationships between different components or raster assets defined in terms of absolute pixel locations. In some cases, a visual asset may include one or more containers, defined in the vector space, in which raster assets (e.g., images) can be inserted. A visual asset may include any number of visual components, and a visual asset may be defined in terms of relative positioning or other spatial relationships between visual components in the visual asset.

In many workflows, the process of designing a visual asset may be decoupled from the process of generating code used to implement the visual asset in an executable environment outside of the design environment. Because of this decoupling, a visual asset may be designed in a design environment and coded in a coding environment. However, the design environment and the coding environment may not support the same features, and thus, the design created in the design environment may not be replicable in the coding environment. In other words, the design of the visual asset created in the design environment may serve as a guide for the creation of the visual asset in the coding environment, and the appearance of the visual asset created in the coding environment may not match the appearance of the visual asset in the design environment.

Additionally, while the processes of designing visual assets and generating code used to implement visual assets may be decoupled, the resulting code generated to implement a visual asset in an executable environment may be tightly coupled with the appearance of the visual asset. Because of this coupling between appearance and implementing code, implementing multiple instances of a visual asset may involve duplicating code in a codebase implementing a visual asset. Thus, to change each instance of a visual asset, the same code may be modified repeatedly.

As the foregoing illustrates, what is needed are more effective techniques for implementing visual content in executable code.

### SUMMARY

One embodiment of the present disclosure provides techniques for rendering visual content in a design environment. An example method includes detecting that a change has been made to a code-defined visual asset loaded on a canvas in a design environment. The code-defined visual asset is copied to a hidden rendering environment in the design environment. The code-defined visual asset is rendered in the hidden rendering environment based on executing code associated with the code-defined visual asset in the hidden rendering environment. An image of the rendered code-defined visual asset is captured, and the captured image of the code-defined visual asset is displayed in the design environment.

One technical advantage of the disclosed techniques relative to the prior art is that the disclosed techniques allow for visual assets to be efficiently and securely rendered in a design environment. When a code-defined visual asset is imported into a design environment, a snapshot (e.g., a static image captured of the code-defined visual asset) may be rendered in the design environment for display to a user of the design environment. In rendering a snapshot in the design environment, embodiments presented herein may bypass execution of source code associated with the code-defined visual asset. Bypassing execution of source code associated with the code-defined visual asset may reduce computing resource utilization and may increase security within the design environment. Generally, rendering a static image may use fewer processing and memory resources than executing code, thus allowing for power and computing resource usage reductions relative to rendering code-defined visual assets in a design environment based on executing the code associated with the code-defined visual asset. Further, because code is not executed when a design including a code-defined visual asset is loaded in a design environment, embodiments presented herein may prevent, or at least reduce the likelihood of, execution of malicious code associated with a code-defined visual asset in the design environment.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a computer system configured to implement one or more aspects of various embodiments of the present disclosure.
Figure 2 illustrates a design environment in which visual components are created and maintained as code-defined assets, according to some embodiments.
Figure 3 is message flow diagrams illustrating messages exchanged between a snapshot engine and a graphic design engine for generating a snapshot of a code-defined visual asset, according to some embodiments.
Figure 4 is a flow diagram of method steps for generating a snapshot of a code-defined visual asset in a design environment, according to some embodiments.
Figure 5 illustrates a network computing system to implement an interactive graphic application platform, according to some embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

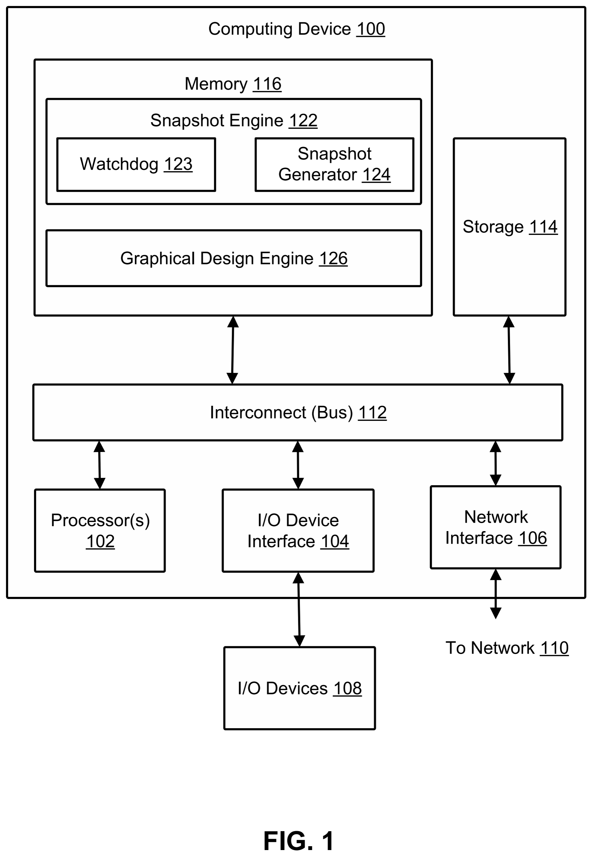

Figure 1 illustrates a computing device 100 configured to implement one or more aspects of various embodiments of the present invention. In one embodiment, computing device 100 includes a desktop computer, a laptop computer, a smart phone, a personal digital assistant (PDA), tablet computer, or any other type of computing device configured to receive input, process data, and optionally display images, and is suitable for practicing one or more embodiments. Computing device 100 is configured to run a snapshot engine 122 (including a watchdog 123 and a snapshot generator 124) and a graphical design engine 126 that reside in a memory 116.

It is noted that the computing device described herein is illustrative and that any other technically feasible configurations fall within the scope of the present disclosure. For example, multiple instances of snapshot engine 122 or graphical design engine 126 could execute on a set of nodes in a distributed and/or cloud computing system to implement the functionality of computing device 100. In another example, snapshot engine 122 or graphical design engine 126 could execute on various sets of hardware, types of devices, or environments to adapt snapshot engine 122 or graphical design engine 126 to different use cases or applications. In a third example, snapshot engine 122 or graphical design engine 126 could execute on different computing devices and/or different sets of computing devices.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

I/O devices 108 include devices capable of providing input, such as a keyboard, a mouse, a touch-sensitive screen, a microphone, and so forth, as well as devices capable of providing output, such as a display device or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

Network 110 is any technically feasible type of communications network that allows data to be exchanged between computing device 100 and external entities or devices, such as a web server or another networked computing device. For example, network 110 may include a wide area network (WAN), a local area network (LAN), a wireless (Wi-Fi) network, and/or the Internet, among others.

Storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Snapshot engine 122 and graphical design engine 126 may be stored in storage 114 and loaded into memory 116 when executed.

Memory 116 includes a random-access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including snapshot engine 122 or graphical design engine 126.

### Example Snapshotting Code-Defined Visual Assets in a Design Environment

In graphical design software, such as that implemented by the graphical design engine 126 illustrated in Figure 1, visual assets, such as user interface components in a user interface under design in the graphical design engine 126, may be rendered and designed. A visual asset, as used herein, may be a group of visual components rendered in a user interface. Visual assets may be defined *a priori* (e.g., as code templates or pre-designed code-defined visual components in the graphical design engine 126) or may be designed by a user of the graphical design engine 126 and implemented in code.

To allow for a graphical interface to be designed using visual assets that are tightly coupled to the implementing code while allowing for these assets to be easily modifiable, embodiments described herein allow for visual assets to be defined, used, and re-used as code-defined assets and for such code-defined visual assets to be rendered as static snapshots in a design environment. Generally, a visual asset including one or more visual components may be defined in an external code asset (e.g., a code file) that can be imported into a design environment. Generally, in importing a visual asset into the design environment, the visual asset can be imported into a layer on a canvas in the design environment. The layer on the canvas in the design environment may allow for spatial organization of various visual assets in the canvas and may allow for visual assets to be isolated from other visual assets and from the external code asset from which a visual asset is derived. Within a layer, various properties, actions, triggers, and the like may be modifiable to allow for customization of the appearance and/or functionality of an instance of a visual asset in the design without modifying the underlying external code asset from which the visual asset was generated. Further, an instance of a visual asset, and the code defining such a visual asset, may be exported to an external code asset for re-use in other designs.

When a code-defined visual asset is modified in the design environment, embodiments described herein detect that a change has been made to the appearance and/or functionality of the code-defined visual asset. As discussed herein, a change to the appearance and/or functionality of the code-defined visual asset may include, without limitation, changes within a layer on a canvas on which the code-defined visual asset is located. A change may include a change to the source code associated with the code-defined visual asset, changes to the properties of the code-defined visual asset, the size of the code-defined visual asset, or the like. The changed code-defined visual asset may be rendered in a hidden rendering environment in the design environment, and after the code-defined visual asset is rendered in the hidden rendering environment, a snapshot of the code-defined visual asset may be captured. As discussed in further detail herein, a snapshot may include a rasterized image of the code-defined visual asset, size information defining how the code-defined visual asset shifts the positioning of other assets in a layer, overflow information defining an amount of space by which the snapshot bleeds into other assets on a canvas, or the like. The snapshot of the code-defined visual asset may be associated with the code-defined visual asset such that the snapshot is rendered in the design environment when the code-defined visual asset is imported into the design environment. By doing so, embodiments described herein may reduce the amount of computing resources used in rendering code-defined visual assets in a design environment and may improve the security of design environments in which code-defined visual assets are rendered. As discussed in further detail herein, a static image of a code-defined visual asset may be rendered in the design environment instead of rendering the code-defined visual asset based on executing the code associated with the code-defined visual asset. Thus, embodiments presented herein may execute less computationally expensive operations in rendering code-defined visual assets in a design environment and may prevent, or at least reduce, the likelihood of, malicious code execution in the local environment when a code-defined visual asset includes arbitrary code.

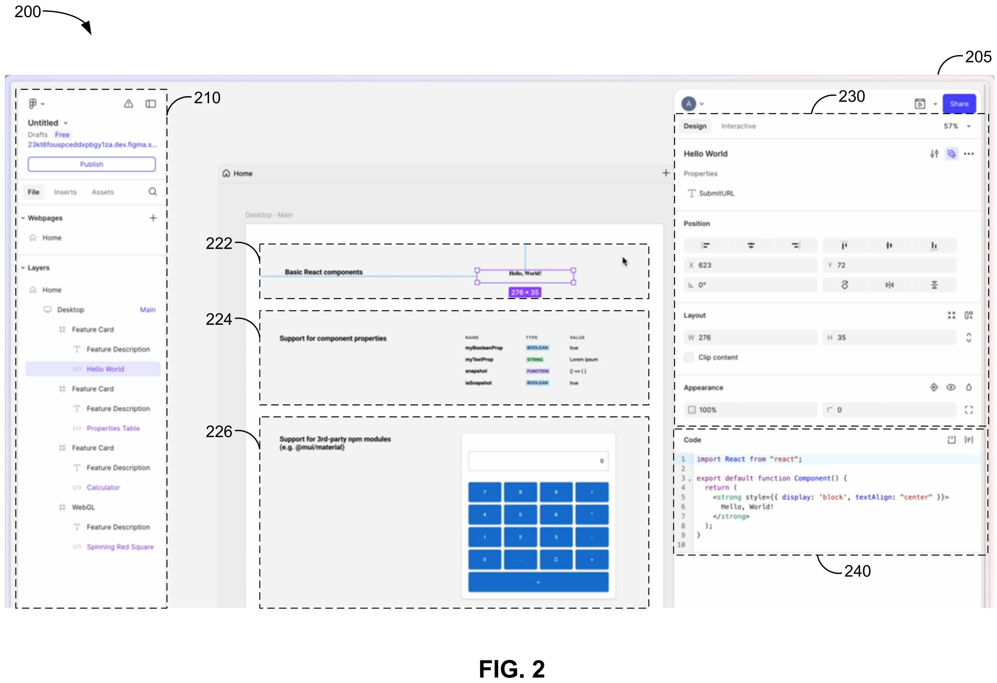

Figure 2 illustrates a design environment 200 in which visual components are created and maintained as code-defined assets, according to some embodiments. The design environment 200 may be rendered by one or both of snapshot engine 122 and/or graphical design engine 126 illustrated in Figure 1.

To allow for visual assets to be defined as code constructs and tightly couple the appearance of visual assets in a design environment 200 with the underlying implementing code, embodiments presented herein may allow for the creation of code implementing a visual asset and the use of these code-defined visual assets as modifiable objects within the design environment 200. As illustrated, the design environment 200 includes a layout panel 210 illustrating one or more layers associated with visual components in a design, a canvas 205 on which instances of code-defined visual assets are displayed, a control panel 230, and a code panel 240.

Visual assets 222, 224, and 226 (amongst others, not illustrated in Figure 2) generally represent instances of different code-defined visual assets. For example, the visual assets 222 and 224 illustrate various examples of visual assets for rendering non-interactive text in a graphical display. The visual asset 226, meanwhile, illustrates an example of an interactive visual asset (in this example, a calculator, though it should be recognized that the illustration of a calculator is but an example, and any type of interactive visual asset may be contemplated) in which interaction with buttons modifies the text displayed in a text field and/or triggers the execution of operations that modify the text displayed in the text field (e.g., triggers the execution of a mathematical operation, the result of which is displayed in the text field). Each of the visual assets 222, 224, and 226 may be contained in a code layer in the canvas 205 and listed in the layout panel 210 to allow for the modification of the properties and/or functionality of the visual assets independently.

Generally, an external code asset may define the appearance of a visual asset (e.g., one of the visual assets 222, 224, 226 illustrated in Figure 2) and/or the functionality of the visual asset. The appearance of the visual asset may be configured, for example, via code-defined properties (e.g., size, foreground and background color, transparency, rotation, border size and style, etc.) that can be modified by a user in the design environment. The functionality of the visual asset may be configured, for example, via triggers, actions, or the like. Generally, triggers may correspond to activity for which a code-defined visual asset emits an event notification that can be used by other code-defined visual assets to trigger execution of other code. Actions, meanwhile, may correspond to activity based on which code is executed (e.g., interaction with a button in a user interface causing code to be executed).

For example, the external code asset associated with the visual asset 222, which implements a static text block, may include code that, when executed, returns instructions for rendering the static text block in a graphical user interface. Because the visual asset 222 does not include interactivity features, the code associated with the visual asset, illustrated in code panel 240, may not include action handlers, triggers, or other code executed when a user interacts with the visual asset. The visual design properties associated with the visual asset may be modifiable via changes in various design parameters displayed in the control panel 230. As illustrated, the parameters for a static text block may include position-related parameters (e.g., location, text orientation, element orientation, padding, etc.), size-related parameters, and the like. In some embodiments, the external code asset associated with the visual asset 222 may include *a priori* defined values for one or more parameters illustrated in the control panel 230. These parameters may be changed by a user in the design environment 200 by modifying the values of these parameters in the control panel 230 or modifying the appearance of the visual asset 222 on canvas 205. Similarly, the external code asset associated with the visual asset 224 may include code that returns instructions for rendering multiple static text blocks in a graphical user interface, each of which may have different properties.

The visual asset 226, which includes various interactivity properties, may be associated with an external code asset that defines both the appearance and functionality of the visual asset 226. The code defining the visual asset 226 may include code for rendering the visual asset 226 in a graphical user interface and code for performing various functions based on interaction with visual components in the visual asset 226. For example, the code may include code that emits triggers that result in modifying the text displayed in a text box or otherwise modify a state of the visual asset 226. The code defining the visual asset 226 may further include action handling code that causes specified operations to be performed within the graphical user interface. For example, action handling code may be attached to specific buttons to define an operation to be performed, to clear a buffer or other memory associated with the calculator, to execute a previously specified operation, or the like.

Visual assets 222, 224, 226, which represent instances of code-defined visual assets rendered on layers in the canvas 205, can be modified in the design environment 200 in a variety of manners. Visual assets may be imported as a code instance in the design environment or as a code layer in the design environment. Modifications to a code instance may be global modifications (e.g., modifications to an external code asset associated with the visual asset) that modify the appearance and/or functionality of all instances of the visual asset in the design environment 200. That is, if a code-defined visual asset is imported as a code instance and one or more instances of the code-defined visual asset are generated in code layers (e.g., via conversion from a code instance, as discussed above), a modification to the code instance version of the code-defined visual asset may be propagated to the instances of the code-defined visual asset in code layers in the canvas 205. In some embodiments, modifications to a visual asset may be recursive, such that a change to a first code-defined visual asset that is used by second code-defined visual asset constitutes a change to both the first code-defined visual asset and the second code-defined visual asset (which, as discussed below, may trigger creation of an updated snapshot for both the first code-defined visual asset and the second code-defined visual asset). Modifications made to a code-defined visual asset in a layer on the canvas 205, meanwhile, may be localized to the specific layer in which a modification is performed.

Modifications to a code-defined visual asset may be performed based on changes to parameters in the control panel 230 or based on changes to code in the code panel 240. When a code-defined visual asset is selected in the canvas 205, the control panel 230 may be populated with one or more controls for modifying the visual appearance of the code-defined visual asset. The code panel 240, meanwhile, may be populated with the code defining the code-defined visual asset. When a modification is made to the properties of the code-defined visual asset in the control panel 230 or via changes to code defining the code-defined visual asset in the code panel 240, the appearance and/or layout of the code-defined visual asset may be updated in the canvas 205. In some embodiments, when the visual appearance of a code-defined visual asset changes, a previously-generated static image (or snapshot) of the code-defined visual asset may be replaced with an updated static image of the updated code-defined visual asset.

To generate snapshots of code-defined visual assets rendered and modified in the design environment 200, a watchdog (e.g., watchdog 123 of the snapshot engine 122 illustrated in Figure 1) monitors the design environment for changes to a code-defined visual asset. Generally, the watchdog 123 may monitor for inputs in one or more control panels (e.g., control panel 230 and/or code panel 240) that change the appearance and/or functionality of a code-defined visual asset 222, 224, 226. When watchdog 123 detects a change to a code-defined visual asset, watchdog 123 can mark the code-defined visual asset as a changed visual asset and instruct a snapshot generator (e.g., snapshot generator 124 illustrated in Figure 1) to generate an updated snapshot of the code-defined visual asset.

In some embodiments, watchdog 123 can determine that a snapshot is to be generated for a code-defined visual asset based on a delta (or other amount of change) between the pre-modification code-defined visual asset and the modified code-defined visual asset. The delta may include, for example, a defined minimum amount of change in the appearance of a visual asset that would cause the watchdog 123 to designate the code-defined visual asset as a modified visual asset for which a snapshot is to be generated. This defined minimum amount of change may be, for example, a number of pixels by which the size or location of a visual component in a visual asset has changed, a number of color steps between the coloration of a pre-modification visual asset and a post-modification visual asset, or the like. If the watchdog 123 determines that the amount of change between the pre-modification visual asset and the modified visual asset is less than the defined delta, then the watchdog 123 can determine that the visual asset has not sufficiently changed and that a new snapshot need not be generated. Otherwise, the watchdog 123 determines that the amount of change between the pre-modification visual asset and the modified visual asset is greater than the defined delta and triggers snapshot generator 124 to generate a snapshot for the modified visual asset.

In some embodiments, watchdog 123 can monitor the code associated with a code-defined visual asset to determine whether a visual asset has been modified sufficiently to justify creation of a new snapshot for the visual asset. For code that modifies the functionality of a visual asset or causes a change to the appearance of the visual asset when a specified event occurs, watchdog 123 can determine that the current snapshot associated with the visual asset is still sufficiently representative of the visual asset. Thus, in such a case, watchdog 123 can determine that a new snapshot need not be generated. For code that modifies the appearance of the visual asset and is not associated with the occurrence of a specified event, however, watchdog 123 can compare the parameter values defining the appearance of the visual asset between the pre-modification code and the modified code. If the delta between the pre-modification code and the modified code exceeds the defined delta, then the watchdog 123 determines that the amount of change between the pre-modification visual asset and the modified visual asset is greater than the defined delta and triggers snapshot generator 124 to generate a snapshot for the modified visual asset.

In some embodiments, watchdog 123 can instruct graphical design engine 126 to change the appearance of a snapshot associated with a modified visual asset on canvas 205 while the snapshot associated with the modified visual asset is updated. For example, watchdog 123 can instruct graphical design engine 126 to apply a defined visual effect to the modified visual asset in the design environment 200 (e.g., adding a shimmer effect, adding a glow effect, highlighting the modified visual asset, etc.).

Snapshot generator 124 generally generates a snapshot of a code-defined visual asset in a hidden rendering environment in the design environment 200 when watchdog 123 determines that the appearance of a visual asset has changed sufficiently. Generally, a hidden rendering environment may be a canvas or other rendering environment that exists logically but is not visible to a user within design environment 200. For example, the hidden rendering environment may be "rendered" with a reference pixel location that is outside the pixel grid of a display (or displays) on which the design environment 200 is rendered. When a new snapshot is generated, the current snapshot associated with the visual asset is no longer representative of the appearance of the visual asset. To generate a snapshot of the code-defined visual asset, snapshot generator 124 copies the source code associated with the code-defined visual asset, including the modifications to the code-defined visual asset, from the canvas 205 to the hidden rendering environment in the design environment 200. The source code may be executed in the hidden rendering environment, causing the visual asset to be rendered on the hidden rendering environment but in such a manner that may not be visible to a user performing tasks in the design environment 200. After snapshot generator 124 renders the visual asset the hidden rendering environment, snapshot generator 124 captures a new image of the visual asset and replaces the previously captured image associated with the visual asset with the new image of the visual asset.

In some embodiments, snapshot generator 124 can generate a snapshot of a modified visual asset immediately after initiating rendering operations in the hidden rendering environment. Generally, snapshot generator 124 can do so when the visual asset includes statically defined visual content. In some embodiments, the modified visual asset may include visual content that is dynamically generated or loaded from an external resource. In such a case, snapshot generator 124 can operate on a delay of a defined amount of time between initiating rendering operations in the hidden rendering environment and capturing a snapshot of the modified visual asset on the hidden rendering environment. The delay may, in some embodiments, be defined based on a type of the visual content dynamically generated or loaded from the external resource, defined *a priori,* or otherwise set such that the dynamically generated content or content from external resources can be loaded in the hidden rendering environment. After the defined amount of time has elapsed from initiating rendering operations in the hidden rendering environment, snapshot generator 124 can capture a snapshot of the modified visual asset.

In some embodiments, snapshot generator 124 can examine the code-defined visual asset for components that include references to external resources. Generally, these references to external resources may be included in various visual components that serve as containers into which other visual content is loaded. Prior to generating a snapshot of the code-defined visual asset, placeholder visual content may be generated for these components and loaded in these components in the hidden rendering environment. The placeholder visual content may include, for example, static images associated with the external resources, keyframes or defined thumbnails associated with external resources that are video or animated content, or the like. The placeholder visual content may be sized based on a size of the components for which the placeholder visual content is to be substituted in the hidden rendering environment.

In some embodiments, snapshot generator 124 can determine the bounding box surrounding the code-defined visual asset and thus the extent to which the snapshot captures the code-defined visual asset in the hidden rendering environment. To do so, snapshot generator 124 can determine a size of the code-defined visual asset and generate a bounding box based on the determined size of the code-defined visual asset and a bleed amount. Generally, the bleed amount may correspond to an additional amount of space in the hidden rendering environment beyond the borders of the code-defined visual asset that can account for content that is generated dynamically and spills over the boundaries of the code-defined visual asset. When snapshot generator 124 captures the snapshot of the code-defined visual asset, snapshot generator 124 can overlay the bounding box on the code-defined visual asset on the hidden rendering environment (e.g., such that the center of the code-defined visual asset is used as the center of the bounding box) and capture an image of the content in the bounding box.

In some embodiments, snapshot generator 124 can capture the image of the code-defined visual asset based on a bounding box defined based on the size of the code-defined visual asset and positions of visual components of the code-defined visual asset. Generally, the positions of these code-defined visual assets may include padding or other additional space that allows for spillover content (e.g., in dropdown boxes or other content controls that extend beyond the boundaries of the code-defined visual asset, shadow effects applied to components in the code-defined visual asset, etc.) to be captured. Snapshot generator 124 can, as discussed above, overlay the bounding box on the code-defined visual asset on the hidden rendering environment (e.g., such that the center of the code-defined visual asset is used as the center of the bounding box) and capture an image of the content in the bounding box.

In some embodiments, snapshot generator 124 can generate the snapshot of the visual component as a high-resolution image. A high-resolution image may be, for example, an image defined based on the resolution of a screen on which the design environment 200 is rendered and a multiplier. The high-resolution image may be captured at a resolution calculated as the product of the resolution of the screen (e.g., in pixels per unit of measurement) and the multiplier. For example, for a screen on which images are rendered at 144 pixels per inch and the multiplier is defined as 2, snapshot generator 124 can generate the snapshot at a resolution of 144 * 2 = 288 pixels per inch.

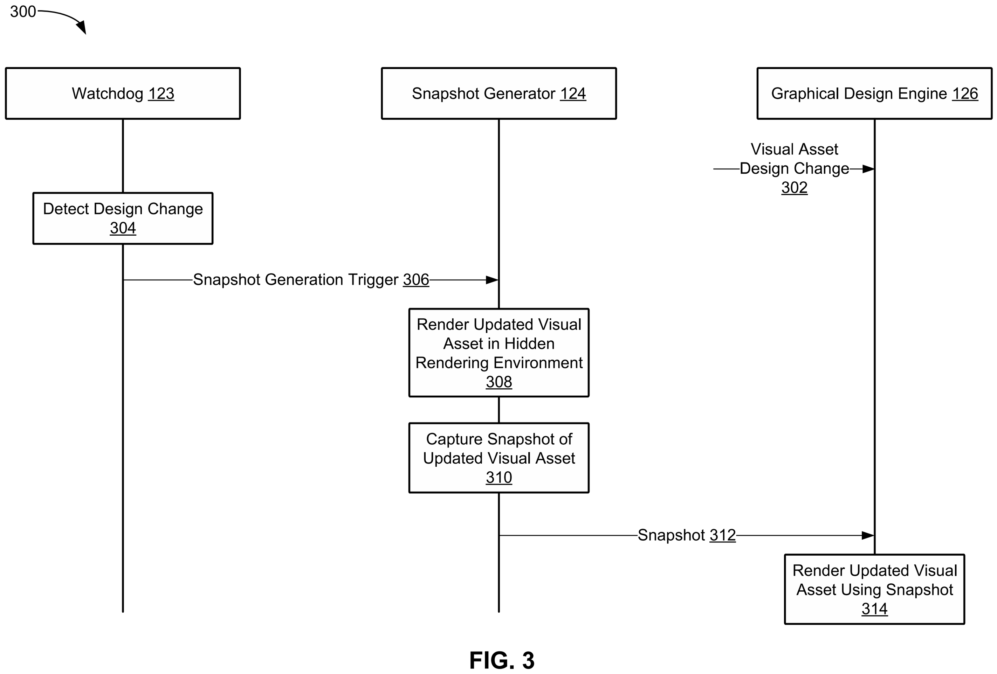

Figure 3 is a message flow diagram 300 illustrating messages exchanged between a snapshot engine 122 (including a watchdog 123 and a snapshot generator 124) and a graphical design engine 126 for generating snapshots of code-defined visual assets in a design environment, according to some embodiments.

To generate a snapshot of a code-defined visual asset, a canvas including one or more layers may be populated with various code-defined visual assets in at least one of the one or more layers. As discussed, each layer may correspond to a container in the canvas in which code-defined visual assets associated with the layer are isolated from code-defined visual assets associated with other layers in the canvas. While working within a layer, code-defined visual assets may be modified (e.g., via modifications made to the design of a code-defined visual asset on the canvas, via modifications to the design of the code-defined visual asset made via changing parameters in a control panel in the design environment, etc.).

As illustrated, a visual asset design change 302 may be input into graphical design engine 126. In various examples, the visual asset design change 302 modifies the appearance of the visual asset by a sufficient amount such that the current snapshot associated with a code-defined visual asset no longer accurately reflects the visual appearance of the code-defined visual asset.

At block 304, watchdog 123 detects a design change to the visual asset. Generally, in detecting a design change, watchdog 123 compares the pre-modification design of the visual asset to the modified visual asset to determine whether the appearance of the visual asset has been changed by more than a threshold amount such that the current snapshot associated with the visual asset no longer accurately reflects the visual appearance of the code-defined visual asset. For example, a threshold size difference, a threshold coloration difference, or the like may be used to determine whether a design change to the visual asset has occurred. In another example, an enumeration of components associated with the code-defined visual asset may be used to determine whether visual components have been added or removed from the code-defined visual asset. Generally, where visual components are added or removed, watchdog 123 can determine at block 304 that a sufficient difference exists between the pre-modification design of the visual asset and the modified visual asset, and thus that a design change has occurred with respect to the visual asset.

Based on detecting a design change to the visual asset at block 304, watchdog 123 emits a snapshot generation trigger 306 to snapshot generator 124. Generally, the snapshot generation trigger 306 indicates to snapshot generator 124 that (1) a code-defined visual asset has changed sufficiently such that the current snapshot associated with the visual asset no longer accurately reflects the visual appearance of the code-defined visual asset and (2) that a new snapshot should be captured for the visual asset. In response to receiving the snapshot generation trigger 306, snapshot generator 124 renders the updated visual asset in a hidden rendering environment at block 308. Generally, to render the updated visual asset in the hidden rendering environment, a canvas in the design environment may be established outside of the coordinates of the screen(s) on which the design environment is rendered. The code associated with the updated visual asset may be copied to the hidden rendering environment for execution, and the updated visual asset may be rendered by executing the code associated with the updated visual asset.

After the updated visual asset is rendered in the hidden rendering environment at block 308, at block 310, snapshot generator 124 captures a snapshot of the updated visual asset. In some embodiments, the snapshot may be captured after instructing graphical design engine 126 to render the updated visual asset in the hidden rendering environment. In some embodiments, where the updated visual asset includes external assets that are to be rendered or otherwise includes assets that take some amount of time to render, block 310 may be executed after a defined amount of time has elapsed after rendering the updated visual asset in the hidden rendering environment at block 310.

After the snapshot is captured at block 310, snapshot generator 124 provides the snapshot 312 to graphical design engine 126. At block 314, graphical design engine 126 renders the updated visual asset in the design environment using the snapshot 312. In rendering the updated visual asset in the design environment, graphical design engine 126 renders the updated visual asset at the appropriate location and reflows other elements on the canvas based on the size of the updated visual asset to match a new layout of a design on a canvas in the design environment.

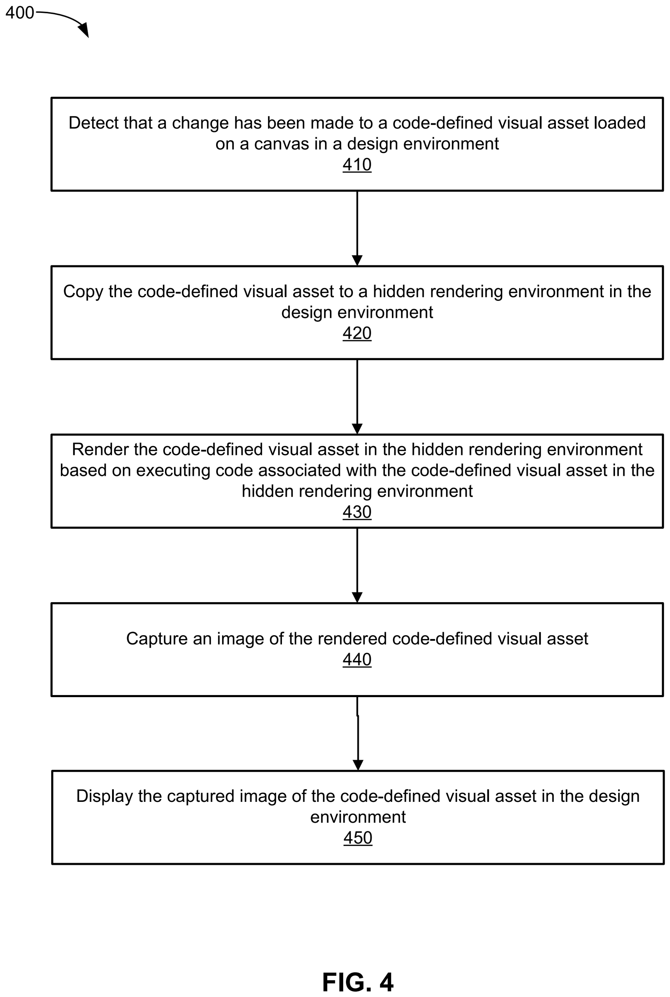

Figure 4 is a flow diagram illustrating example operations 400 for generating snapshots of code-defined visual assets, according to some embodiments. The operations 400 may be performed, for example, by snapshot generator (e.g., snapshot generator 122 illustrated in Figure 1) executing on a computing system including one or more processors, such as the processor(s) 102 of the computing device 100 illustrated in Figure 1.

As illustrated, the operations 400 begin at block 410, with the snapshot generator 122 detecting that a change has been made to a code-defined visual asset loaded on a canvas in a design environment.

In some embodiments, detecting that a change has been made to the code-defined visual asset may include detecting that an amount of the change exceeds a threshold amount. The threshold amount may be, for example, a threshold size difference (e.g., in terms of a number of pixels), a threshold coloration difference, additions or removals of a threshold number of visual components, or the like.

At block 420, the operations 400 proceed with the snapshot generator 122 copying the code-defined visual asset to a hidden rendering environment in the design environment.

At block 430, the operations 400 proceed with the snapshot generator 122 rendering the code-defined visual asset in the hidden rendering environment based on executing code associated with the code-defined visual asset in the hidden rendering environment.

In some embodiments, the image of the rendered code-defined visual asset may be captured upon initiating rendering of the code-defined visual asset in the hidden rendering environment.

In some embodiments, the image of the rendered code-defined visual asset is captured based on elapsing of a time period after initiating rendering of the code-defined visual asset in the hidden rendering environment.

In some embodiments, the image of the rendered code-defined visual asset is captured based on receiving an indication from the hidden rendering environment that rendering of the code-defined visual asset has completed. In some embodiments, the image of the rendered code-defined visual asset may be performed based on the earlier of completion of rendering of the code-defined visual asset in the hidden rendering environment or a defined timeout period.

At block 440, the operations 400 proceed with the snapshot generator 122 capturing an image of the rendered code-defined visual asset.

In some embodiments, capturing the image of the rendered code-defined visual asset may include identifying one or more visual components in the code-defined visual asset in which an external resource is loaded. Placeholder visual content for the identified one or more visual components may be generated. The identified one or more visual components in the image of the rendered code-defined visual asset may be replaced with the placeholder visual content. In some embodiments, the external resource comprises a video, and the static image may be a keyframe or thumbnail selected from or otherwise associated with the video.

In some embodiments, capturing the image of the rendered code-defined visual asset may include determining a size of the code-defined visual asset. A bounding box may be generated based on the size of the code-defined visual asset and a bleed amount. Content inside the bounding box may then be captured. Generally, the bounding box is overlaid on the code-defined visual asset on the hidden rendering environment in the design environment (e.g., such that a central point of the code-defined visual asset is also a central point of the bounding box).

In some embodiments, capturing the image of the rendered code-defined visual asset may include generating a bounding box based on a size of the code-defined visual asset and positions of each visual component of the code-defined visual asset. Content inside the bounding box may then be captured. Generally, the bounding box is overlaid on the code-defined visual asset on the hidden rendering environment in the design environment.

At block 450, the operations 400 proceed with the snapshot generator 122 saving the captured image of the rendered code-defined visual asset for rendering in the design environment.

In some embodiments, the operations 400 further include replacing a previously generated image of the code-defined visual asset with the captured image in the canvas in the design environment without executing code associated with the code-defined visual asset in the design environment.

In some embodiments, a resolution of the captured image is higher than a resolution at which the code-defined visual asset is rendered on a screen on which the design environment is displayed.

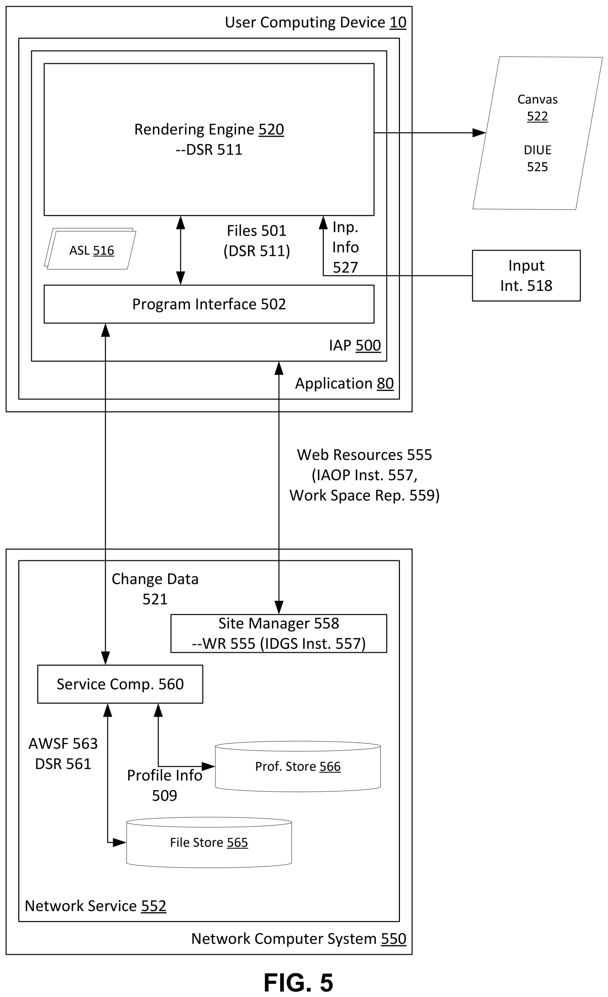

Figure 5 illustrates a network computing system to implement an interactive application platform on a user computing device, according to some embodiments. A network computing system such as illustrated in Figure 5 can be implemented using one or more servers which communicate with user computing devices over one or more networks. The network computer system 550 illustrated in Figure 5 may correspond, for example, to the computing device 100 illustrated in Figure 1 and can be used to generate and/or modify visual content based on generative artificial intelligence models and an input prompt specifying a design objective for the visual content.

In some embodiments, the network computing system 550 performs operations to enable an interactive application platform ("IAP 500") to be implemented on user computing devices 10. In some embodiments, the IAP 500 can be implemented by the user initiating a session (e.g., user accessing a website) to receive programmatic resources of the IAP 500. A browser component executes the programmatic resources to implement the IAP 500, with functionality to receive user input and to render content that is based on or responsive to user input. As described, the IAP 500 is implemented to enable the user to create various types of content, such as interactive graphic designs, art, whiteboard content, program code renderings, presentations, and/or textual content. As further described, the IAP 500 can include logic ("ASL 516") for implementing one or more application services, where each application service is implemented through the IAP 500 to provide a corresponding set of functionality and user experience. The IAP 500 also implements the application services to share some resources, such as the canvas, workspace file or library of design elements. Further, the IAP 500 enables multiple application services to be used during a given online session and/or with respect to a particular application service.

According to some embodiments, a user of computing device 10 operates web-based application 80 to access a network site, where programmatic resources are retrieved and executed to implement the IAP 500. The web-based application 80 can execute scripts, code and/or other logic (the "programmatic components") to implement functionality of the IAP 500. In some embodiments, the web-based application 80 can correspond to a commercially available browser, such as GOOGLE CHROME (developed by GOOGLE, INC.) or SAFARI (developed by APPLE, INC.). In some embodiments, the processes of the IAP 500 can be implemented as scripts and/or other embedded code which web-based application 80 downloads from a network site. For example, the web-based application 80 can execute code that is embedded within a webpage to implement processes of the IAP 500. The web-based application 80 can also execute the scripts to retrieve other scripts and programmatic resources (e.g., libraries) from the network site and/or other local or remote locations. By way of example, the web-based application 80 may execute JAVASCRIPT embedded in an HTML resource (e.g., web-page structured in accordance with HTML 5.0 or other versions, as provided under standards published by W3C or WHATWG consortiums). In some embodiments, the rendering engine 520 may utilize graphics processing unit (GPU) accelerated logic, such as provided through WebGL (Web Graphics Library) programs which execute Graphics Library Shader Language (GLSL) programs that execute on GPUs.

The IAP 500 can be implemented as part of a network service, where web-based application 80 communicates with one or more remote computers (e.g., server used for a network service) to execute processes of the IAP 500. The web-based application 80 retrieves some or all of the programmatic resources for implementing the IAP 500 from a network site. The web-based application 80 may also access various types of data sets in providing the IAP 500. The data sets can correspond to files and design libraries (e.g., predesigned design elements), which can be stored remotely (e.g., on a server, in association with an account) or locally. In some embodiments, the network computer system 550 provides a shared design library which the user computing device 10 can use with any of the application services provided through the IAP 500. In this way, the user may initiate a session to implement the IAP 500 for the purpose of creating or editing the workspace file, as rendered on the canvas 522, in accordance with one of multiple collaborative application services of the IAP 500.

In some embodiments, the IAP 500 includes a program interface 502, an input interface 518 and a rendering engine 520. The program interface 52 can include one or more processes which execute to access and retrieve programmatic resources from local and/or remote sources. In an implementation, the program interface 502 can generate, for example, a canvas 522, using programmatic resources which are associated with web-based application 80 (e.g., HTML 5.0 canvas). As an addition or variation, the program interface 502 can trigger or otherwise cause the canvas 522 to be generated using programmatic resources and data sets (e.g., canvas parameters) which are retrieved from local (e.g., memory) or remote sources (e.g., from network service).

The program interface 502 may also retrieve programmatic resources that include an application framework for use with canvas 522. The application framework can include data sets which define or configure, for example, a set of interactive graphic tools that integrate with the canvas 522 and which comprise the input interface 518, to enable the user to provide input to generate or update content rendered on the canvas 522.

According to some embodiments, the input interface 518 can be implemented as a functional layer that is integrated with the canvas 522 to detect and interpret user input. The input interface 518 can, for example, process a user's interaction with an input mechanism (e.g., pointer device, keyboard) of the user computing device, to detect, for example, cursor positioning/movement with respect to the canvas 522, hover input (e.g., pre-selection input), selection input (e.g., clicks or double clicks), shortcuts (e.g., key board inputs) and other inputs. In processing a user's interaction with a pointer device, the input interface 518 can use a reference of the canvas 522 to identify a screen location of a user's cursor as the user moves or otherwise interacts with the pointer device. Additionally, the input interface 518 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In some embodiments, the input interface 518 can interpret, for example, a series of inputs as a design tool selection (e.g., shape selection based on location of input), as well as inputs to define attributes (e.g., dimensions) of a selected shape. **In** some embodiments, the input interface 518 can interpret a continuous input (corresponding to a continuous movement of the user's pointer device) as selecting a tool (e.g., shape too) and canvas location where an output of the selected tool is to appear.

In some embodiments, the IAP 500 includes application service logic 516 to enable multiple application services to be utilized during a given user session, where each application service provides the user with a particular functionality and/or user experience. As described by some embodiments, each application service is implemented by the IAP 500 utilizing a corresponding application service logic 516 to configure the interface component 518, rendering engine 520 and/or other components of the IAP 500 to provide the functionality and user experience of the corresponding application service. In this way, the IAP 500 enables the user to operate multiple application services during one online session. Further, the different application services can share resources, including programmatic resources of the IAP 500, such as canvas 522. In this way, each application service can contribute content to and/or utilize features and content provided with the canvas 522 during a given session. Still further, the application services can be implemented as alternative modalities of IAP 500, such that the user can toggle between modes, where each mode provides a particular functionality and user experience. In some embodiments, each application service can utilize a common workspace file associated with the user. By default, a computing device that opens the workspace file can utilize a default application service to access and/or update that workspace file. The user may also switch the mode of operation of the IAP 500 to utilize a different application service to access, use and/or update the workspace file.

The network computing system 550 can include a site manager 558 to manage a website where a set of web-resources 555 (e.g., web page) are made available for the web-based application 80 of user computing devices 10. The web-resources 555 can include instructions, such as scripts or other logic ("ICAP instructions 557"), which are executable by browsers or web components of user computing devices. The web resources 555 can also include (i) resources that are to be shared as between application services, provided to the user computing devices in connection with the user computing devices utilizing either of the application services, and (ii) application specific resources, which execute on the user computing devices for a particular one of the available application services. The web resources 555 can also include a design library of design elements that is partially or fully shared as between the application services. The library of design elements can enable the user to select predetermined design elements for use on the canvas 522 in connection with the user utilizing either of the application services.

In some variations, once the computing device 10 accesses and downloads the web-resources 555, web-based application 80 executes the IAP instructions 557 to implement functionality as described above. For example, the IAP instructions 557 can be executed by web-based application 80 to initiate the program interface 502 on the user computing device 10. The initiation of the program interface 502 may coincide with the establishment of, for example, a web-socket connection between the program interface 502 and a service component 560 of the network computing system 550.

In some embodiments, the web-resources 555 includes logic which web-based application 80 executes to initiate one or more processes of a program interface 502, causing the IAP 500 to retrieve additional programmatic resources and data sets for implementing functionality as described by examples. The web resources 555 can, for example, embed logic (e.g., JAVASCRIPT code), including GPU accelerated logic, in an HTML page for download by computing devices of users. The program interface 502 can be triggered to retrieve additional programmatic resources and data sets from, for example, the network service 552, and/or from local resources of the computing device 10, in order to implement each of the multiple application services of the IAP 500. For example, some of the components of the IAP 500 can be implemented through webpages that can be downloaded onto the computing device 10 after authentication is performed, and/or once the user performs additional actions (e.g., download one or more pages of the workspace associated with the account identifier). Accordingly, in examples as described, the network computing system 550 can communicate the IAP instructions 557 to the computing device 10 through a combination of network communications, including through downloading activity of web-based application 80, where the IAP instructions 557 are received and executed by web-based application 80.

The computing device 10 can use web-based application 80 to access a website of the network service 552 to download the webpage or web resource. Upon accessing the website, web-based application 80 can automatically (e.g., through saved credentials) or through manual input, communicate an account identifier to the service component 560. In some embodiments, web-based application 80 can also communicate one or more additional identifiers that correlate to a user identifier.

Additionally, in some embodiments, the service component 560 can use the user or account identifier of the user identifier to retrieve profile information 509 from a user profile store 566. As an addition or variation, profile information 509 for the user can be determined and stored locally on the user's computing device 10.

The service component 560 can also retrieve the files of an active workspace ("active workspace files 563") that are linked to the user account or identifier from a file store 565. The profile store 566 can also identify the workspace that is identified with the account and/or user, and the file store 565 can store the data sets that comprise the workspace. The data sets stored with the file store 565 can include, for example, the pages of a workspace and one or more data structure representations 561 for the design under edit which is renderable from the respective active workspace files.

As an addition or variation, each file can be associated with metadata that identifies the application service that was used to create the particular file. In some embodiments, the metadata identifies the default application service for viewing, utilizing or otherwise updating the application service.

Additionally, in some embodiments, the service component 560 provides a representation 559 of the workspace associated with the user to the web-based application 80, where the representation identifies, for example, individual files associated with the user and/or user account. The workspace representation 559 can also identify a set of files, where each file includes one or multiple pages, and each page including objects that are part of a design interface.

On the user device 10, the user can view the workspace representation through web-based application 80, and the user can elect to open a file of the workspace through web-based application 80. In some embodiments, upon the user electing to open one of the active workspace files 563, web-based application 80 initiates the canvas 522. For example, the IAP 50 can initiate an HTML 5.0 canvas as a component of web-based application 80, and the rendering engine 120 can access one or more data structures representations 511 of content rendered on the canvas 522.

The IAP 500 utilizes application service logic 516 to implement multiple modes of operation, where each mode corresponds to an application service. As described, the application service logic 516 associated with each service application can include instructions and data for configuring the components of IAP 500 to include functionality and features of the corresponding application service. Accordingly, the application service logic 516 can, for example, configure the application framework and/or input interface 518 to differ in form, functionality and/or configuration as between the alternative modes of the IAP 500. Additionally, the type of actions and interactions which the user can perform to register input can vary based on the modes of operation. Still further, the different modes of operation can include different input or user-interface features for the user to select and use for inclusion on the canvas 522. By way of example, when the IAP 500 is operating in a mode for whiteboarding service application, the program interface 502 can provide input features to enable a user to select a design element that is in the form of a "sticky note," while in an alternative mode for an interactive graphic design service application, the "sticky note feature" is not available. However, in the alternative mode, the user may be able to select anyone of numerous possible shapes or previously designed objects which the user can write textual messages in for display on the canvas 522.

Additionally, the application service logic 516 can configure the operation of the rendering engine 520, such that the functionality and behavior of the rendering engine 520 differs as between different application services. In this way, the rendering engine 520 functions to provide alternative behaviors for different modes of operation, coinciding with the particular service application that is active. By way of example, the configuration of the rendering engine 520 can affect the appearance of the canvas 522, the appearance (e.g., visual attributes) of rendered content elements on the canvas 522, the behavior or representation of user interaction (e.g., whether the user cursor or pointe device is represented on the canvas 522), the type or specific content that is rendered, the physic engine that is used by the rendering engine to represent dynamic events (e.g., the object being moved), what user operations can be performed (e.g., whether select objects can be resized), and the like.

Additionally, each of the application services can utilize a shared library of content elements (e.g., graphic design element), as well as core functionality that enables design elements to be shared and updated between the different application services that are available through the platform. Additionally, the workspace file created and edited through use of one application service can be utilized with the other application service. Moreover, the transition between application services can be seamless-for example, the user computing device 10 can open a workspace file using the first application service (e.g., interactive graphic design application service for UIX design) then seamlessly switch to using the second application service (e.g., whiteboarding application service) with the same file, without closing the workspace file. In some embodiments, each application service enables the user to update the workspace file even while the workspace file is in use by other computing devices (e.g., such as in a collaborative environment). In some embodiments, the user can mode switch the IAP 500 to switch which application service is in use, with each application service utilizing the workspace file.

### Example Clauses

Various aspects of the present disclosure are described in the following numbered clauses.
1. In some embodiments, a processor-implemented method, comprising: detecting that a change has been made to a code-defined visual asset loaded on a canvas in a design environment; copying the code-defined visual asset to a hidden rendering environment in the design environment; rendering the code-defined visual asset in the hidden rendering environment based on executing code associated with the code-defined visual asset in the hidden rendering environment; capturing an image of the rendered code-defined visual asset; and saving the captured image of the rendered code-defined visual asset for rendering in the design environment.
2. The method of clause 1, wherein detecting that a change has been made to the code-defined visual asset comprises detecting that an amount of the change exceeds a threshold amount.
3. The method of any of clauses 1 or 2, wherein the image of the rendered code-defined visual asset is captured upon initiating rendering of the code-defined visual asset in the hidden rendering environment.
4. The method of any of clauses 1 through 3, wherein the image of the rendered code-defined visual asset is captured based on elapsing of a time period after initiating rendering of the code-defined visual asset in the hidden rendering environment.
5. The method of any of clauses 1 through 4, wherein capturing the image of the rendered code-defined visual asset comprises: identifying one or more visual components in the code-defined visual asset in which an external resource is loaded; generating placeholder visual content for the identified one or more visual components; and replacing the identified one or more visual components in the image of the rendered code-defined visual asset with the placeholder visual content.
6. The method of clause 5, wherein generating the placeholder visual content comprises capturing a static image from the external resource.
7. The method of clause 6, wherein the external resource comprises a video, and wherein the static image comprises a keyframe selected from the video.
8. The method of any of clauses 1 through 7, wherein capturing the image of the rendered code-defined visual asset comprises: determining a size of the code-defined visual asset; generating a bounding box based on the size of the code-defined visual asset and a bleed amount; and capturing content inside the bounding box, wherein the bounding box is overlaid on the code-defined visual asset on the hidden rendering environment in the design environment.
9. The method of any of clauses 1 through 8, wherein capturing the image of the rendered code-defined visual asset comprises: generating a bounding box based on a size of the code-defined visual asset and positions of each visual component of the code-defined visual asset; and capturing content inside the bounding box, wherein the bounding box is overlaid on the code-defined visual asset on the hidden rendering environment in the design environment.
10. The method of any of clauses 1 through 9, further comprising replacing a previously-generated image of the code-defined visual asset with the captured image in the canvas in the design environment without executing code associated with the code-defined visual asset in the design environment.
11. The method of any of clauses 1 through 10, wherein a resolution of the captured image is higher than a resolution at which the code-defined visual asset is rendered on a screen on which the design environment is displayed.
12. A processing system, comprising: at least one memory having executable instructions thereon; and one or more processors configured to execute the executable instructions to cause the processing system to perform the method of any of clauses 1 through 11.
13. A processing system, comprising: means for performing the method of any of clauses 1 through 11.
14. A non-transitory computer-readable medium having executable instructions stored thereon which, when processed by one or more processors, causes the one or more processors to perform the method of any of clauses 1 through 11.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A processor-implemented method, comprising:
detecting that a change has been made to a code-defined visual asset loaded on a canvas in a design environment;
copying the code-defined visual asset to a hidden rendering environment in the design environment;
rendering the code-defined visual asset in the hidden rendering environment based on executing code associated with the code-defined visual asset in the hidden rendering environment;
capturing an image of the rendered code-defined visual asset; and
displaying the captured image of the rendered code-defined visual asset in the design environment.

2. The method of claim 1, wherein detecting that a change has been made to the code-defined visual asset comprises detecting that an amount of the change exceeds a threshold amount.

3. The method of claim 1 or 2, wherein the image of the rendered code-defined visual asset is captured upon initiating rendering of the code-defined visual asset in the hidden rendering environment.

4. The method of any preceding claim, wherein the image of the rendered code-defined visual asset is captured based on elapsing of a time period after initiating rendering of the code-defined visual asset in the hidden rendering environment.

5. The method of any preceding claim, wherein capturing the image of the rendered code-defined visual asset comprises:
identifying one or more visual components in the code-defined visual asset in which an external resource is loaded;
generating placeholder visual content for the identified one or more visual components; and
replacing the identified one or more visual components in the image of the rendered code-defined visual asset with the placeholder visual content.

6. The method of claim 5, wherein generating the placeholder visual content comprises capturing a static image from the external resource.

7. The method of claim 6, wherein the external resource comprises a video, and wherein the static image comprises a keyframe selected from the video.

8. The method of any preceding claim, wherein capturing the image of the rendered code-defined visual asset comprises:
determining a size of the code-defined visual asset;
generating a bounding box based on the size of the code-defined visual asset and a bleed amount; and
capturing content inside the bounding box, wherein the bounding box is overlaid on the code-defined visual asset on the hidden rendering environment in the design environment.

9. The method of any preceding claim, wherein capturing the image of the rendered code-defined visual asset comprises:
generating a bounding box based on a size of the code-defined visual asset and positions of each visual component of the code-defined visual asset; and
capturing content inside the bounding box, wherein the bounding box is overlaid on the code-defined visual asset on the hidden rendering environment in the design environment.

10. The method of any preceding claim, further comprising replacing a previously-generated image of the code-defined visual asset with the captured image in the canvas in the design environment without executing code associated with the code-defined visual asset in the design environment.

11. The method of any preceding claim, wherein a resolution of the captured image is higher than a resolution at which the code-defined visual asset is rendered on a screen on which the design environment is displayed.

12. A processing system, comprising:
at least one memory having executable instructions stored thereon; and
one or more processors configured to execute the executable instructions in order to cause the processing system to perform the method of any preceding claim.

13. A computer-readable medium having executable instructions stored thereon which, when processed by one or more processors, causes the one or more processors to perform the method of any of clauses 1 to 11.
